# EUROPÄISCHE PATENTSCHRIFT

(11) **EP 2 051 869 B1**
(45) Veröffentlichungstag und Bekanntmachung des Hinweises auf die Patenterteilung: **29.02.2012**
(21) Anmeldenummer: 07801197.0
(22) Anmeldetag: 30.07.2007
(51) Int. Cl.: B60H 1/00, G01J 1/42

(54) **SONNENSENSOR**
SOLAR SENSOR
CAPTEUR SOLAIRE

(30) Priorität: 17.08.2006 DE 102006038497
(43) Veröffentlichungstag der Anmeldung: 29.04.2009
(60) Teilanmeldung: 11170178.5
(73) Patentinhaber: Epcos AG, 81669 München (DE)
(72) Erfinder: KUBIAK, Michael, 10249 Berlin (DE); BARD, Oliver, 14612 Falkensee (DE); KLOIBER, Gerald, A-8073 Feldkirchen (AT); ZIMMERMANN, Gero, 5432 Neuenhof (CH); BALZER, Peter, 10179 Berlin (DE)
(74) Vertreter: Epping - Hermann - Fischer
(86) Internationale Anmeldenummer: PCT/DE2007/001359
(87) Internationale Veröffentlichungsnummer: WO 2008/019650

(56) Entgegenhaltungen:
- EP-A- 0 350 866
- WO-A-94/23277
- WO-A-99/13359
- US-A1- 2002 024 000

## Beschreibung

Es wird ein Sonnensensor beschrieben. Der Sonnensensor ist dazu geeignet, ein elektrisches Signal in Abhängigkeit der Position einer Sonne in Bezug auf den Sonnensensor auszugeben.

Aus DE 38 21 743 A1 ist ein Sensor zur Erfassung von Sonneneinstrahlung in einem Fahrgastraum eines Kraftfahrzeugs bekannt. Auch aus den Dokumenten WO 94/23277, EP 0350866, WO 99/13359 und US 2002/0024000 sind Sonnensensoren bekannt.

Eine zu lösende Aufgabe besteht darin, einen Sensor anzugeben, mit dem die Winkel einfallender elektromagnetischer Wellen genau bestimmt werden können, und dessen Fotodetektor vor Übersteuerung durch senkrecht einfallende Strahlung geschützt ist.

Diese Aufgabe wird gelöst durch einen Sonnen sensor mit den Merkmalen von Anspruch 1.

Ein Modulator ist ein Körper, der aufgrund seiner geometrischen- und/oder Materialeigenschaften die einfallenden elektromagnetischen Wellen moduliert. Dabei können sie zumindest teilweise absorbiert, gestreut oder gebrochen werden.

In Wechselwirkung miteinander können der erste und der weitere Modulator die elektromagnetischen Wellen derart beeinflussen, dass die von ihnen erzeugte Signalkurve durch den Fotodetektor eine Aussage über den Einfallswinkel der elektromagnetischen Wellen erlaubt. Die Berechnung der Einfallswinkel erfolgt mit einer Auswerteeinheit, die ein Auswerteprogramm umfasst. Von dieser kann beispielsweise in Bezug auf die Position der Quelle der elektromagnetischen Wellen ein Azimutwinkel und ein Elevationswinkel berechnet werden.

Der Fotodetektor wandelt die Energie der einfallenden elektromagnetischen Wellen in für eine Auswerteeinheit lesbare elektrische und/ oder optische Ausgangssignale.

Der Sonnensensor wird vorzugsweise zur Steuerung einer Klimaanlage verwendet, beispielsweise in einem Gebäude oder in einem mobilen Mittel, wie zum Beispiel in einem Kraftfahrzeug oder Flugzeug.

Ein Bereich des gürtelförmigen Bereichs des weiteren Modulators, der breiter ausgeführt ist, als andere Bereiche des gürtelförmigen Bereichs, dient dazu, elektromagnetische Wellen mit einer Intensität ab eines bestimmten Wertes bzw. Wertbereiches innerhalb eines bestimmten Spektrums auf den Fotodetektor zu verhindern bzw. zu verringern. Eine Übersteuerung des Fotodetektors kann somit vermieden werden, insbesondere dann, wenn die Sonne hoch im Himmel steht bzw. die Sonneneinstrahlung in einem Bereich umfassend ihrer maximalen Intensität auf den Fotodetektor trifft.

Ein Bereich des gürtelförmigen Bereichs des weiteren Modulators, der schmaler ausgeführt ist, als andere Bereiche des gürtelförmigen Bereichs, dient dazu, abgeschwächte elektromagnetische Wellen mit solchen sich von der Senkrechte unterscheidenden und flacheren Einfallswinkeln weniger zu blockieren, sodass die Ausgangssignalsspannung des Fotodetektors entsprechend erhöht werden kann.

Die Kombination eines Wissens über die Form des weiteren Modulators sowie der auf den Fotodetektor einfallenden elektromagnetischen Energie ermöglicht daher die Bestimmung der relativen Anordnung der Sonne zum Fotodetektor. Die Form des weiteren Modulators, bzw. die relative Positionen von größerer oder kleinerer Breiten des gürtelförmigen Bereichs des Modulators kann sich dabei durch das aus Simulationen oder Experimente erhaltene empirische Wissen ergeben.

Gemäß einer Ausführungsform des Sonnensensors weist der erste Modulator mindestens einen kuppelförmigen Bereich auf, unter dem vorzugsweise der Fotodetektor angeordnet ist.

Vorzugsweise weist der erste Modulator einen Schrägschliff auf, der die einfallenden elektromagnetischen Wellen in die Richtung des Fotodetektors bricht. Dabei ist es günstig, wenn der Schrägschliff nicht durch den weiteren Modulator abgedeckt ist, sodass die einfallenden elektromagnetischen Wellen ohne Hindernis in den ersten Modulator eindringen können.

Es wird bevorzugt, dass der erste Modulator als Prisma ausgeführt ist. Dabei kann er einen Schrägschliff aufweisen.

Das Prisma ist gemäß einer Ausführungsform mit mehreren Schrägschliffen ausgeführt, die jeweils die einfallenden elektromagnetischen Wellen in eine gewünschte Richtung, insbesondere auf den Fotodetektor, brechen.

Der weitere Modulator kann als mechanische Halterung für den ersten Modulator ausgeführt sein.

Gemäß einer Ausführungsform des Sonnensensors ist der weitere Modulator als Prismenhalter ausgeführt, der als Fassung für den als Prisma ausgeführten ersten Modulator dient.

Im mobilen Mittel, wie zum Beispiel in einem Kraftfahrzeug, wird der erste Modulator in der Form eines Prismas mit einem Schrägschliff vorzugsweise derart angeordnet, dass die Fläche des schräggeschliffenen Bereichs zur Fahrtrichtung des Kraftfahrzeugs gerichtet ist. Der Schrägschliff weist eine Neigung und eine Fläche auf, die die durch die Fensterscheibe des Fahrzeugs einfallenden elektromagnetischen Wellen auf den Fotodetektor lenken. Eine durch Infrarotwellen erzeugte Wärme kann daher mittels einer zuverlässigen Steuerung der Klimaanlage für den Komfort des Fahrers oder Beifahrers kompensiert werden. Eine erhöhte Empfindlichkeit des Sonnensensors kann somit für frontale Einstrahlung erreicht werden.

Es wird bevorzugt, dass der erste und/oder der weitere Modulator einstückig ausgebildet sind. Dabei können sie aus einem einzigen Materialguss gefertigt sein. Dies hat den Vorteil einer einfacheren Herstellbarkeit sowie einer möglichst einheitlichen Materialverteilung, die die Modulation der einfallenden elektromagnetischen Wellen beeinflusst.

Gemäß einer Ausführungsform weist der Sonnensensor zwei jeweils einen Fotodetektor abdeckende kuppelförmige Bereiche auf.

Der kuppelförmige Bereich des ersten Modulators auf einer im Vergleich zu einer Referenzachse linken Seite, wie zum Beispiel links der Fahrtrichtungsachse eines Fahrzeugs, bricht die einfallenden elektromagnetischen Wellen anders, als ein sich auf der rechten Seite der Referenzachse befindlicher kuppelförmiger Bereich. Somit unterscheiden sich die Ausgangssignale der sich unterhalb der kuppelförmigen Bereiche befindlichen Fotodetektoren, sodass auch die von rechts oder von links einfallenden elektromagnetischen Wellen voneinander unterschieden werden können. Die von den Fotodetektoren stammenden Signale werden in einer Auswerteeinheit derart ausgewertet, dass beispielsweise eine Klimaanlage auf die von rechts oder von linken einfallende Wärme reagieren kann. Ein derartiger Sonnensensor, der von links einfallendes Licht von rechts einfallendem Licht unterscheidet, kann als Zweizonensonnensensor oder als Dualsonnensensor betrachtet werden.

Vorzugsweise weist der Sonnensensor neben einem kuppelförmigen Bereich des ersten Modulators ein Anschlussstück auf, durch den Befestigungsmittel einführbar sind. Hierzu kann das Anschlussstück mit einem Loch ausgebildet sein. Beispiele geeigneter Befestigungsmittel sind Schrauben oder Stifte, die den Sonnensensor mit einer Montageplatte, wie zum Beispiel eine möglicherweise mit elektrischen Bauelementen versehenen Leiterplatte, befestigen. Auch kann der weitere Modulator mit solchen Befestigungsmöglichkeiten ausgestattet sein.

Der weitere Modulator weist zudem vorzugsweise eine Form auf, mittels derer er formschlüssig mit dem ersten Modulator an seiner Außenseite angeordnet werden kann. Dadurch wird eine einfache Montage bzw. kompakte Zusammenstellung des Sonnensensors erreicht. Beispielsweise könnte der weitere Modulator über den ersten Modulator geschoben werden. Wenn Befestigungsmittel an geeigneten Stellen der beiden Modulatoren, wie zum Beispiel an Vorsprüngen, durchgeführt werden, kann eine sichere Anbindung des weiteren Modulators auf dem ersten Modulator und insgesamt eine sichere Befestigung des Sonnensensors mit einer Montageplatte erreicht werden.

Gemäß einer Ausführungsform des Sonnensensors weist der weitere Modulator als gürtelförmigen Bereich mit unterschiedlichen Breiten mindestens einen gebogenen Bügel auf, der an die Außenkontur des unter dem weiteren Modulator liegenden ersten Modulators, insbesondere seiner kuppelförmigen Bereiche, angepasst ist.

Insbesondere wird bevorzugt, dass der weitere Modulator einen gürtelförmigen Bereich aufweist, der im oberen, kuppelförmigen Bereich des ersten Modulators breiter ausgeführt ist, als in den Bereichen des ersten Modulators, die sich näher an einer Montageplatte befinden. Dadurch wird erreicht, dass elektromagnetische Wellen mit im Bezug auf die Senkrechte des Fotodetektors relativ flachen Einfallswinkeln weniger durch den weiteren Modulator blockiert werden und daher .einfacher zum Fotodetektor gelangen können. Abgeschwächte elektromagnetische Wellen mit relativ geringer Intensität, die von der nahe am Horizont positionierten Sonne stammen, können somit verlässlich detektiert werden.

Der weitere Modulator kann einen den Umriss des ersten Modulators umlaufenden Rahmen aufweisen. Beispielsweise könnte der weitere Modulator eine E-Form aufweisen, in deren Einbuchtungen jeweils ein kuppelförmiger Bereich des ersten Modulators angeordnet ist. Ein gürtelförmiger Bereich des weiteren Modulators verbindet dabei zwei sich gegenüber liegende Stege des E-förmigen ersten Modulators. Die E-Form hat den Vorteil, dass der erste Modulator an der Seite der Öffnungen der E-Form nicht vom weiteren Modulator umgeben ist. Dadurch können die elektromagnetischen Wellen von dieser Seite her ohne Hindernis in den Sonnensensor einfallen. Vorzugsweise weist der erste Modulator an dieser Seite einen Schrägschliff auf. Somit können elektromagnetische Wellen durch geeignete Brechung besser vom Bereich des Schrägschliffs zum Fotodetektor gelangen.

Gemäß einer weiteren Ausführungsform des Sonnensensors enthält der erste Modulator ein transluzentes Material. Die Signalkurve der auf den Fotodetektor einfallenden elektromagnetischen Wellen kann mittels dieser Maßnahme geglättet werden, da das transluzente Material die elektromagnetischen Wellen streut. Das hat den Vorteil, etwaige Artefakte in den Ausgangssignalen des Fotodetektors zu verringern sodass die Verlässlichkeit der vom Fotodetektor ausgehenden Ausgangssignale erhöht wird.

Als transluzentes Material wird ein Polycarbonat bevorzugt. Das transluzente Material könnte derart beschaffen sein, dass das Innenleben des Sonnensensors, d.h. die unterhalb des ersten Modulators befindlichen Strukturen, optisch nicht gezeigt werden. Insbesondere können Materialien für den ersten Modulator eingesetzt werden, die für Infrarotstrahlen transparent sind, sodass sie ungehindert oder nahezu ungehindert zum Fotodetektor gelangen können. Zudem ist es günstig, der erste Modulator aus einem Material geschaffen ist, welches optisches, d.h. sichtbares Licht absorbiert. Gemäß einer Ausführungsform des Sonnensensors sind der erste Modulator und der zweite Modulator von einer Abdeckkappe umgeben, die für dieselben elektromagnetischen Wellen durchlässig ist, wie der erste Modulator. Dabei könnte die Abdeckkappe eine Oberflächenrauhigkeit, zum Beispiel auf ihrer den Modulatoren zugewandten Seite und/oder ihrer Außenseite, aufweisen. Die Abdeckkappe ist vorzugsweise an die Form eines Armaturenbretts eines Fahrzeuges angepasst, in dem der Sonnensensor eingebaut sein könnte. Dabei könnte sie die natürliche Kontur des Armaturenbretts aufnehmen oder dieselbe Farbe bzw. dieselbe Oberflächenstruktur aufweisen. Bei gezielter Auswahl der Position der erhöhten Oberflächenrauhigkeit kann die Streuung bzw. das Glätten der Intensität der einfallenden elektromagnetischen Wellen verbessert werden. Mit Hilfe der Abdeckkappe kann also effektiv in die Empfangscharakteristik des Sonnensensors eingegriffen werden.

Die beschriebenen Gegenstände werden anhand der folgenden Figuren und Ausführungsbeispiele näher erläutert. Dabei zeigen:
- Figur 1: eine Draufsicht auf einen Einzonen-Sonnensensor,
- Figur 2: einen Draufsicht auf einen Zweizonen-Sonnensensor,
- Figur 3: eine Seitenansicht auf einen Zweizonen-Sonnensensor,
- Figur 4: eine Seitenansicht eines Modulators mit Abdeckfunktion für einen Zweizonen-Sonnensensor,
- Figur 5: eine Seitenansicht eines lichtdurchlässigen Modulators für einen Zweizonen-Sonnensensor,
- Figur 6: eine perspektivische Ansicht auf einen lichtdurchlässigen Modulator für einen Zweizonen-Sonnensensor,
- Figur 7a: eine Schnittansicht eines Zweizonen-Sonnensensors mit einer Abdeckkappe,
- Figur 7b: eine Drauf- und Schnittansicht eines Zweizonen-Sonnensensors mit einer Abdeckkappe,
- Figur 7c: eine Schnitt- und Seitenansicht eines Zweizonen-Sonnensensors mit einer Abdeckkappe,
- Figur 7d: eine weitere Schnittansicht eines Zweizonen-Sonnensensors mit einer Abdeckkappe
- Figur 8: ein Diagramm zur Erläuterung der in diesem Dokument verwendeten Begriffe Azimut- und Elevationswinkel,
- Figur 9: ein Diagramm zur weiteren Erläuterung des in diesem Dokument verwendeten Begriffs Azimutwinkel,
- Figur 10: ein Diagramm zur weiteren Erläuterung des in diesem Dokument verwendeten Begriffs Elevationswinkel,
- Figur 11: eine Grafik zur Darstellung der Abhängigkeit der Ausgangssignalspannung eines Fotodetektors vom variablen Elevationswinkel bei konstantem Azimutwinkel von -90°,
- Figur 12: eine Grafik zur Darstellung der Abhängigkeit der Ausgangssignalspannung eines Fotodetektors vom variablen Elevationswinkel bei konstantem Azimutwinkel von 45°,
- Figur 13: eine Grafik zur Darstellung der Abhängigkeit der Ausgangssignalspannung eines Fotodetektors vom variablen Elevationswinkel bei konstantem Azimutwinkel von 0°,
- Figur 14: eine Grafik zur Darstellung der Abhängigkeit der Ausgangssignalspannung eines Fotodetektors vom variablen Elevationswinkel bei konstantem Azimutwinkel von -45°.

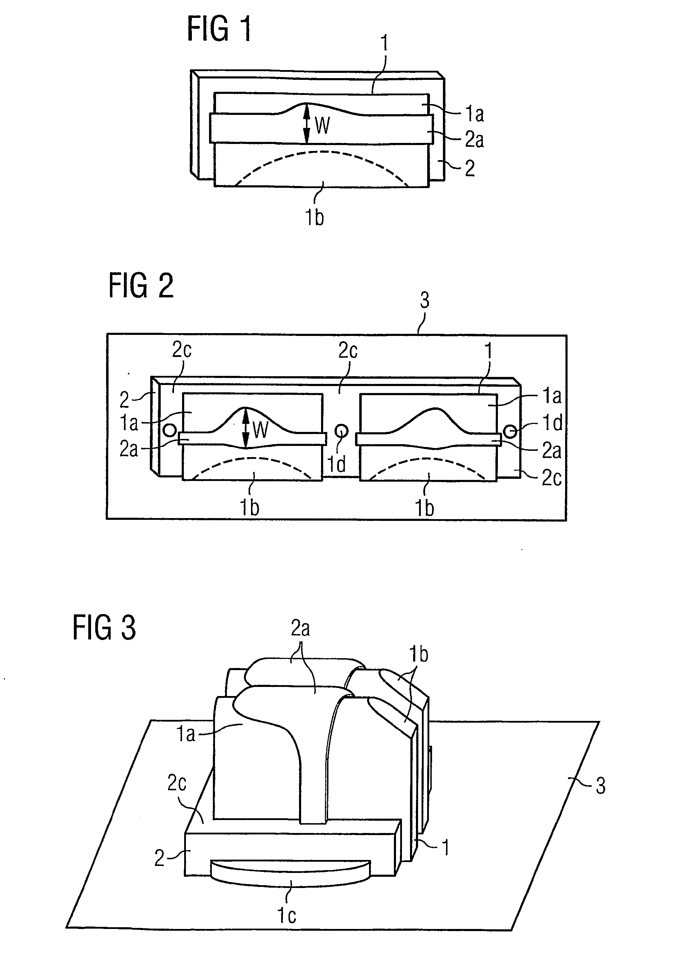

Figur 1 zeigt einen Einzonen-Sonnensensor mit einem einstückigen, für elektromagnetische Wellen innerhalb eines Spektrums durchlässigen ersten Modulator 1 und einem weiteren einstückigen Modulator 2, der den Ersten teilweise abdeckt. Der weitere Modulator weist einen dunklen, vorzugsweise schwarzen Kunststoff auf bzw. ist aus diesem hergestellt. Der erste Modulator 1 weist einen kuppelförmigen Bereich 1a und einen Schrägschliff 1b auf. Um den kontinuierlich gekrümmten bzw. kuppelförmigen Bereich 1a des ersten Modulators herum ist ein gürtelförmiger Bereich 2a des weiteren Modulators 2 vorhanden. Der weitere Modulator 2 umfasst einen auf einer Seite offenen Rahmen, in dem der erste Modulator 1 eingeführt ist. Ausgehend von zwei sich gegenüberliegenden Armen des Rahmens erstreckt sich der gürtelförmige Bereich 2a des weiteren Modulators wie ein Bogen vorzugsweise formschlüssig oder zumindest nahezu formschlüssig um den ersten Modulator. Der Rahmen und gürtel- bzw. bogenförmiger Bereich des weiteren Modulators ist vorzugsweise aus einem einzigen Materialguss gefertigt. Der weitere Modulator 1 kann aus einem Kunststoff hergestellt sein. Insbesondere darf er leicht elastisch ausgeführt sein, sodass er mittels einer Schnappwirkung verrutschsicher auf den ersten Modulator geschoben werden kann.

Der Einzonen-Sonnensensor weist einen Fotodetektor auf, der von den Modulatoren 1 und 2 abdeckt ist und daher in dieser Figur nicht gezeigt wird. Der Fotodetektor ist vorzugsweise im Infrarotbereich des elektromagnetischen Spektrums empfindlich. Dabei ist der erste Modulator 1 für elektromagnetische Wellen in diesem Spektrum durchlässig, der weitere Modulator dagegen nicht oder zumindest nur geringfügig.

Der Gürtelbereich des weiteren Modulators 2 weist eine variierende Breite w auf. Dadurch wird erreicht, das elektromagnetische Wellen selektiv aus unterschiedlichen Richtungen mit unterschiedlicher Intensität auf den Fotodetektor fallen. Sollten beispielsweise aus einer gegenüber der Fotodetektorfläche senkrechten Richtung elektromagnetische Wellen auf den Einzonen-Sonnensensor fallen, würden diese in höherem Maße von einem relativ breiten Bereich des Modulatorgürtels 2a ausgeblendet werden. Somit kann eine Übersteuerung des Fotodetektors verhindert werden. Auch wird gleichzeitig die Empfindlichkeit des Einzonen-Sonnensensors für elektromagnetische Wellen, die flach zur genannten Senkrechten einfallen, erhöht, denn in den Bereichen des weiteren Modulators 2, die näher am Boden des Einzonen-Sonnensensors liegen, ist der Gürtel 2a schmaler ausgebildet. In der Figur könnten solche relativ flach auf den Fotodetektor einfallende elektromagnetische Wellen als von rechts oder links kommend betrachtet werden.

Der Schrägschliff 1b des ersten Modulators 1 umfasst vorzugsweise eine von der Öffnung des Rahmens abgewandte Fläche, durch die elektromagnetische Wellen vom weiteren Modulator 2 ungehindert in den ersten Modulator eindringen können. Der Schrägschliff dient dazu, die Empfindlichkeit des Sonnensensors für elektromagnetische Wellen zu erhöhen, die in Bezug auf die Fahrtrichtung eines Fahrzeuges, in dem der Sonnensensor eingebaut sein könnte, von vorne, insbesondere bei einer Elevation der Sonne von ca. 50° über dem Horizont, einfallen. Die Erhöhung der Empfindlichkeit wird dadurch erreicht, dass der Schrägschliff 1b die von vorne einfallenden elektromagnetischen Wellen direkt auf den Fotodetektor leitet, ohne dass sie dabei gebogen werden müssten. Somit kann die von vorne in den Fahrgastraum einfallende Sonnenwärme, welche üblicherweise zu einem rapiden Temperaturanstieg im Fahrgastraum führt, insbesondere im Bereich des Fahrers und des Beifahrers, verlässlich erkannt werden. Entsprechend steuern die für diese Einstrahlung kennzeichnende Ausgangssignale des Sonnensensors die Klimaanlage derart an, dass eine schnelle Kühlwirkung zur Erhöhung des Fahrzeuginsassenkomforts erreicht wird.

Aufgrund seiner Empfindlichkeit im Infrarotbereich des elektromagnetischen Spektrums ist der Einzonen-Sonnensensor zum Erfassen von eingehender Sonnenwärme geeignet, unabhängig vom Einfallswinkel der Sonnenstrahlung, und kann daher zur Steuerung einer Klimaanlage eines mobilen Gegenstands verwendet werden, wie zum Beispiel in einem Kraftfahrzeug, Schienenfahrzeug oder Flugzeug.

Figur 2 zeigt einen auf einer Montageplatte 3 angeordneten Zweizonen-Sonnensensor, der im Wesentlichen zwei nebeneinander angeordnete Einzonen-Sonnensensoren gemäß Figur 1 und den entsprechenden Beschreibungsteilen umfasst. In diesem Falle ist der einstückige erste Modulator 1 mit zwei kuppelförmigen Bereichen 1a, die jeweils einen Schrägschliff 1b aufweisen, ausgebildet. Der weitere einstückige Modulator 2 weist zwei gürtelförmige Bereiche 2a auf, die um die kuppelförmigen Bereiche 1a des ersten Modulators 1 gebildet sind. Der weitere Modulator 2 weist gemäß der Ausrichtung, wie sie nur beispielhaft in der Figur gezeigt wird, eine gekippte E-Form auf, in deren beiden Öffnungen die kuppelförmigen Bereiche 1a des ersten Modulators eingesetzt sind. Der mittlere Arm bzw. Steg der E-Form ist mit den um den ersten Modulator 1 gebogenen, gürtelförmigen Bereiche 2a des weiteren Modulators 2 verbunden. Die Arme des E-förmigen Rahmens des weiteren Modulators 2 können Durchführungen 1d aufweisen, durch die Befestigungsmittel wie Schrauben oder Nuten geführt werden können, um den Zweizonen-Sonnensensor mit einer Montageplatte 3, beispielsweise mit einer Leiterplatte, sicher zu befestigen.

Unterhalb eines jeden kuppelförmigen Bereichs 1a des ersten Modulators befindet sich ein in dieser Figur nicht gezeigter Fotodetektor.

Der Zweizonen-Sonnensensor ist mittels seiner rechts und links von einer Referenzachse liegenden Fotodetektoren in der Lage, um zumindest 180° zueinander versetzte Einstrahlungen von elektromagnetischen Wellen zu erfassen. Dies hat den Vorteil, dass der Zweizonen-Sonnensensor in einem mobilen Mittel, dessen Orientierung sich ändern kann, zuverlässige Messungen über die in das Mittel eintreffende elektromagnetische Energie, wie zum Beispiel Sonneneinstrahlung, abgeben kann.

Figur 3 stellt eine perspektivische Seitenansicht auf den mit der Figur 2 und der dazugehörigen Beschreibung beschriebenen Zweizonen-Sonnensensor dar. Es wird ein erster Modulator 1 mit mehreren kuppelförmigen Bereichen 1a gezeigt, wobei neben einem kuppelförmigen Bereich ein Trägerteil 2c des weiteren Modulators 2 angeordnet ist. Ein als Rahmen ausgebildetes Trägerteil 2c des weiteren Modulators liegt dabei vorzugsweise zumindest teilweise auf einen neben dem kuppelförmigen Bereich 1a angeordneten Vorsprung 1c des ersten Modulators 1. Wenn nun der weitere Modulator 2 auf den Ersten geschoben wird, drückt das Trägerteil 2c auf den Vorsprung 1c, wodurch der erste Modulator 1 auf eine Montageplatte, ggf. unter Verwendung von Befestigungsmitteln, gedrückt werden kann.

Auch werden von den Öffnungen des E-förmigen Rahmens des weiteren Modulators abgewandte Schrägschliffe 1b des ersten Modulators gezeigt.

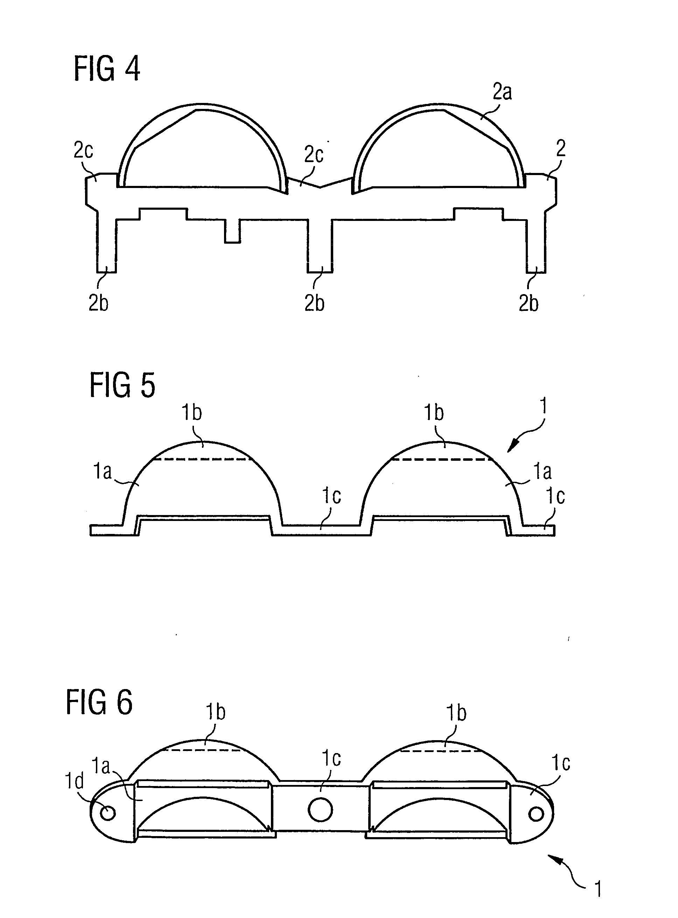

Figur 4 ist eine Seitenansicht auf den weiteren Modulator 2 und zeigt seine zwei Bögen 2a, die mit unterschiedlichen Breiten ausgeführt sind. Auch wird ein Trägerteil 2c in der Form einer Brücke gezeigt, der die Bögen miteinander verbindet. Trägerteile 2c, die Teil einer Rahmenform bilden, sind ebenfalls außenseitig neben den Bögen angeordnet. Die Außenkontur der Unterseite, d.h. die später auf eine Montagefläche gerichtete Seite des weiteren Modulators 2 ist an die entsprechende Außenkontur des ersten Modulators vorzugsweise derart angepasst, dass der weitere Modulator formschlüssig auf den ersten Modulator liegt.

Der weitere Modulator 2 weist unterseitig mehrere senkrecht verlaufende Stäbe oder Stifte 2b auf, die in entsprechende Löcher des ersten Modulator und ggf. solche der Montageplatte eingeführt werden können.

Figur 5 zeigt einen ersten Modulator 1 in der Form von zwei mittels einer Brücke 1c miteinander verbundenen Kuppeln 1a. Jede Kuppel 1a weist dabei einen Schrägschliff 1b auf. Die Kuppel bzw. kuppelförmigen Bereiche 1a des ersten Modulators würden jeweils einen Fotodetektor, wie zum Beispiel eine Fotodiode, abdecken.

Figur 6 ist eine perspektivische Ansicht auf die Unterseite des ersten Modulators 1 und zeigt den Hohlraum innerhalb jeder Kuppel 1a sowie Löcher 1d, die in die Brücken 1c neben den Kuppeln 1a eingearbeitet sind, um Befestigungsmittel, wie zum Beispiel solche mit der Figur 4 gezeigten Stifte 2b des weiteren Modulators oder Schrauben, aufnehmen zu können. Von der Unterseite des ersten Modulators 1 gesehen können die schräggeschliffenen Bereiche 1b als Dachschrägen betrachtet werden, die die runde Innenwand der Kuppeln 1a mittels eines flachen Bereichs unterbrechen.

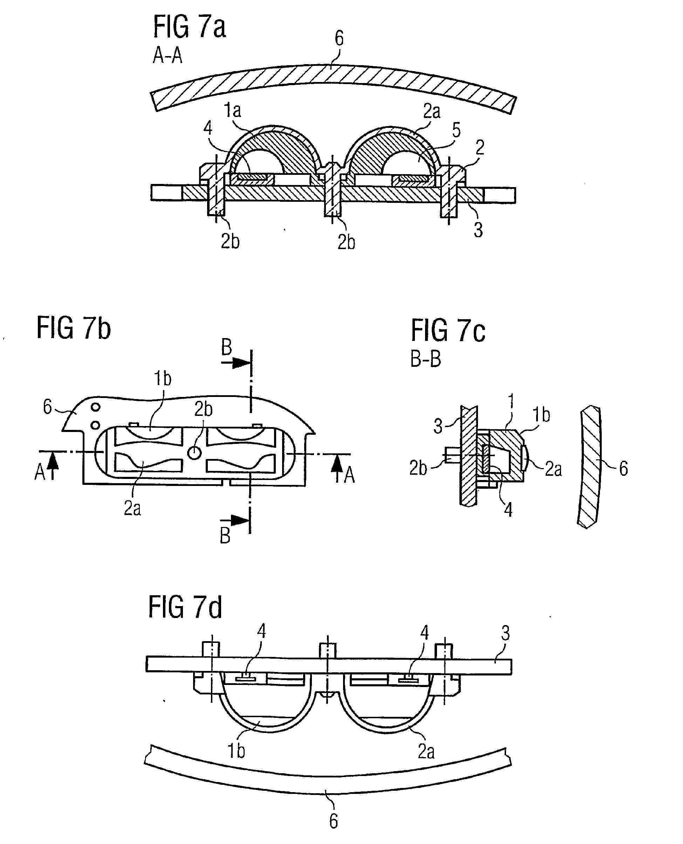

Mit der Figur 7 werden verschiedene technische Schnittansichten eines Zweizonen-Sonnensensors angegeben, wobei die verschiedenen Ansichten relativ zueinander umgekippt sind. Die Ansichten haben bezüglich der tatsächlichen Einbaulage des Sonnensensors, beispielsweise in einem Armaturenbrett eines Kraftfahrzeugs, keine Relevanz und dienen lediglich der Veranschaulichung der Konstruktion bzw. des Innenlebens des Sonnensensors.

Figur 7a zeigt ein Schnittbild einer Zweizonen-Sonnensensoranordnung, bei der ein Zweizonen-Sonnensensor von einer Haube oder Abdeckkappe 6 umgeben ist. Die Abdeckhaube kann auf die Form eines Gegenstands, in dem der Sonnensensor eingebaut wird, beispielsweise ein Armaturenbrett, angepasst sein. Sie ist vorzugsweise für dieselben elektromagnetischen Wellen, beispielsweise Infrarotstrahlung, durchlässig, wie der erste Modulator 1. Sie hat auch die Funktion, den Zweizonen-Sonnensensor vor äußeren Einflüssen wie z.B. Staub, Schmutz oder Feuchtigkeit zu schützen. Die Abdeckkappe kann dabei Teil eines Gehäuses des Sonnensensors bilden. Gemäß einer Ausführungsform der Abdeckkappe 6 könnte sie auf ihrer Innenseite eine Oberflächenrauhigkeit aufweisen, die auf die von einem Kunden gewünschte Ausgangssignalcharakteristik der Fotodetektoren angepasst ist. Die Oberflächenrauhigkeit könnte beispielsweise zur Dämpfung der Intensitätsspitzen einfallender elektromagnetischer Wellen dienen.

Das Schnittbild zeigt die genannten Fotodetektoren 4, die jeweils gegenüber der Referenzachse versetzt unterhalb einer Kuppel 1a angeordnet sind. Auch werden mit Luft oder mit einem anderen für die Fotodetektoren unempfindliches Material gefüllte Hohlräume 5 gezeigt, die zwischen jedem Fotodetektor 4 und der Decke einer jeden Kuppel 1a angeordnet sind. Perspektivisch betrachtet sind die Hohlräume halbzylinderförmig.

Mit der Figur 7b wird ein Schnittbild einer Draufsicht auf den Zweizonen-Sonnensensor gezeigt. Zur Veranschaulichung wird dabei die Abdeckkappe 6 als mit einer Aussparung versehen gezeigt um das Innenleben des Sensors darzustellen. So wird unterhalb der Abdeckkappe 6 in einer NegativDarstellung der einstückige weitere Modulator 2 mit seinen gürtelförmigen Bereichen bzw. Bügeln 2a gezeigt. Neben den Bügeln 1a werden die abgeschrägten Bereiche 1b der Kuppel 1b des ersten Modulators gezeigt. Mittig zwischen den Kuppeln 1a wird ein Schnitt eines Befestigungsmittels 2b, beispielsweise ein Stab oder eine Schraube, gezeigt.

Figur 7c zeigt ein Schnittbild aus der Perspektive B-B auf eine Seite des Zweizonen-Sonnensensors. Es wird ein Schnitt des oberen gürtelförmigen Bereichs 2a des weiteren Modulators sowie ein Schnitt des Hohlraums 5 gezeigt.

Figur 7d zeigt ein Schnittbild des mit der Figur 7a gezeigten Sonnensensors, der mit dieser Abbildung jedoch zur Darstellung der in Figur 7a nicht sichtbaren Rückseite umgekippt dargestellt ist. Der Schnitt ergibt sich durch eine Betrachtung auf die bezüglich der Fahrtrichtung eines Fahrzeugs, in dem der Sonnensensor eingebaut sein könnte, Vorderseite des Sonnensensors. Es werden andere Seiten der Fotodetektoren 4 gezeigt, wodurch Lötstellen bzw. Lötbeinchen unterhalb der Fotodetektoren sichtbar gemacht werden. Aufgrund der Schnittansicht auf die Vorderseite des Sonnensensors sind auch die schräggeschliffenen Bereiche 1b des ersten Modulators 1 sichtbar.

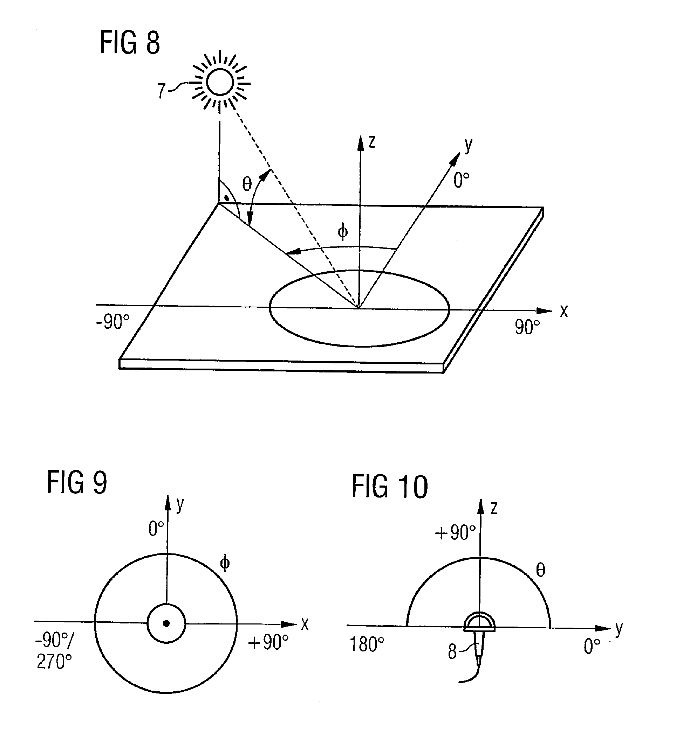

Figur 8 ist ein schematisches Bild zur Erläuterung der nachfolgend verwendeten Begriffe Azimutwinkel ϕ und Elevationswinkel θ. Die y-Achse zeigt dabei die Bewegungsrichtung eines Automobils, in dem ein Sonnensensor der beschriebenen Art eingebaut sein kann. Die z-Achse ist eine zur Fotodetektorfläche senkrechte Achse. Die x-Achse zeigt dagegen eine zur y-Achse rechtwinklige Achse, die quer durch einen oder mehrere Fotodetektoren des Sensors führt.

Der Elevationswinkel θ ist der Winkel, der relativ zu der durch die Achsen x und y gebildeten planaren Ebene durch die Höhe der Sonne 7 gebildet wird. Er kann als Höhestand bzw. Stand über den Horizont bezeichnet werden. Er erreicht seinen maximalen Wert, wenn sich die Sonne senkrecht oberhalb des Fotodetektors des Sensors befindet.

Der Azimutwinkel ϕ wird durch den Winkel bestimmt, der zwischen der y-Achse und der x-Achse gebildet wird.

Figur 9 zeigt die Bereiche des Azimutwinkels ϕ. Er hat einen Wert von 0° bzw. 360° wenn die Sonne 7 sich auf einem Punkt entlang der Ordinate befindet. Einen Wert von 90 bzw. -90° hat der Winkel auf einem Punkt entlang der Abszisse.

Figur 10 zeigt die Bereiche des Elevationswinkels θ sowie die Position des Sonnensensors 8 relativ zu den z und y-Achsen. Die y-Achse zeigt dabei in die Fahrtrichtung des Fahrzeugs, in dem der Sonnensensor eingebaut ist.

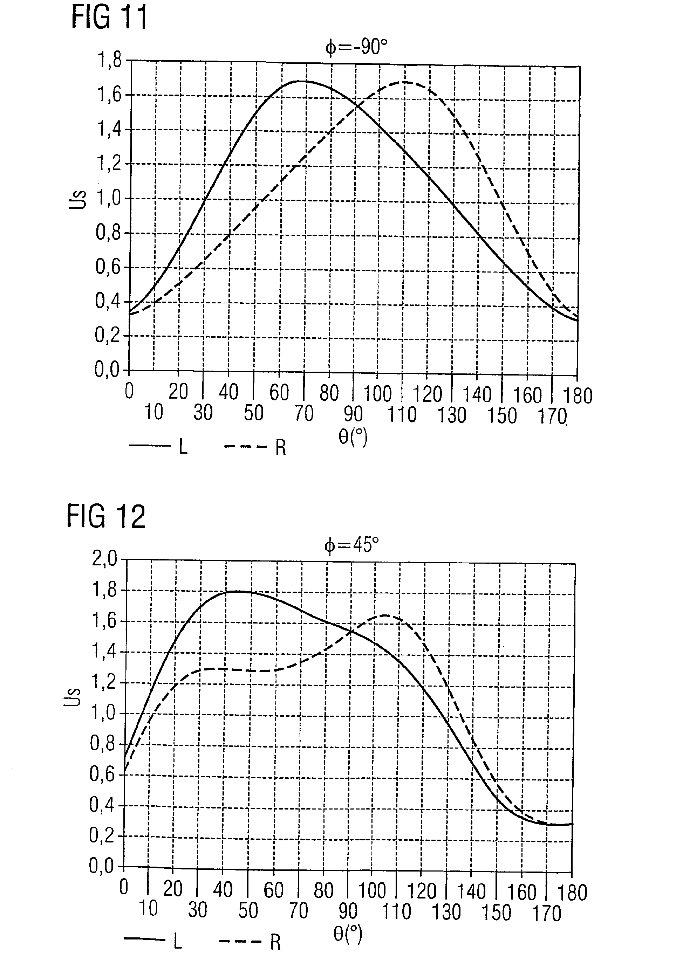

Figuren 11 bis 14 zeigen die Ausgangssignalspannungen Uₛ eines Zweizonen-Sonnensensors in Abhängigkeit des Elevationswinkels θ der Sonne bei vier konstanten Azimutwinkeln ϕ. Die durchgehenden und gestrichelten Kurven zeigen dabei jeweils die Ausgangsignalspannungen der rechts (R) und links (L) zu einer Referenzachse angeordneten Fotodetektoren des Sonnensensors, wobei die Referenzachse durch die Fahrtrichtung eines Fahrzeuges definiert ist, in dem der Sonnensensor eingebaut ist. Die unterschiedlichen Kurvenformen der folgenden Figuren sind auf verschiedene Reaktionen der beiden Fotodetektoren zurückzuführen, die sich durch die sich leicht unterscheidenden Einfallswinkel der auf die Fotodetektoren treffenden elektromagnetischen Wellen ergeben.

Die Figur 11 zeigt die Ausgangssignalspannung jeweils des linken und des rechten (gestrichelte Linie) Fotodetektors bei einem konstantem Azimutwinkel φ von -90° und variierendem Elevationswinkel θ von 0 bis 180°. Die 180°-Spanne des Elevationswinkels umfasst dabei die Strecke der Sonne zwischen Sonnenaufgang an einem Punkt am Horizont (Elevation 0°, Azimut -90°) und Sonnenuntergang an einem gegenüberliegenden Punkt am Horizont (Elevation 180°, Azimut 90°)- Zu Beginn der ausgeführten Messung befindet sich die Sonne auf der rechten Seite des Sensors am Horizont und zum Schluss der ausgeführten Messung auf der linken Seite des Sensors auf der Höhe des Horizonts. Die Sonne wandert im Höhenwinkel also entlang der in Figur 10 gezeigten Abszisse. Die erzeugten Ausgangssignalspannungen beider Fotodetektoren liegen dabei zwischen 0,3 und 1,7 mV.

Figur 12 zeigt dagegen die Ausgangssignalspannung jeweils des linken und des rechten Fotodetektors bei konstantem Azimutwinkel von θ = 45°. Bei dieser veränderten Ausrichtung des Sonnensensors bezüglich der Sonne bzw. veränderte azimutale Position der Sonne gegenüber dem Sonnensensor liegen die Werte der linken und der rechten Sensorhälfte zwischen 0,3 und 1,8 mV.

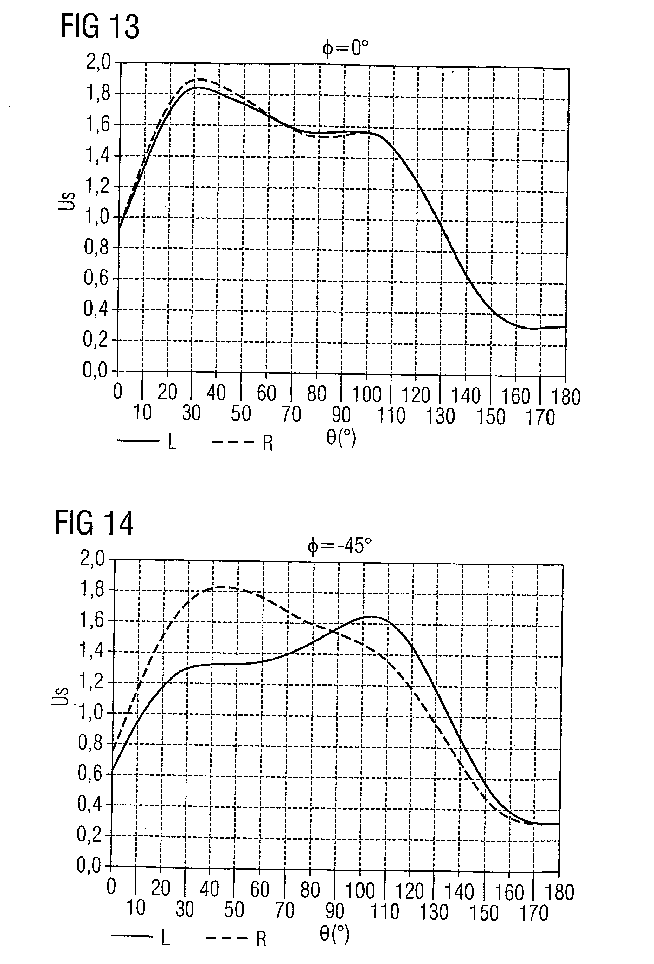

Figur 13 zeigt die Ausgangsignalspannungen der beiden Sensorhälften wenn die Sonne in Bezug auf den Sonnensensor mit einem Azimutwinkel von 0° auf der Linie der Referenzachse bzw. der Ordinate liegt, die die Fahrtrichtung eines Fahrzeuges, in dem der Sonnensensor eingebaut ist, entspricht. Zwischen Sonnenaufgang und Sonnenuntergang wurden Ausgangssignalspannungen zwischen 0,3 und 1,9 mV erreicht.

Figur 14 zeigt die Ausgangsignalspannungen der beiden Sensorhälften wenn die Sonne in Bezug auf den Sonnensensor einen Azimutwinkel von -45° hat. Es wurden Ausgangssignalspannungen zwischen 0,3 und ca. 1,85 mV erreicht. Es ist sichtbar, dass die Ausgangssignale der rechten und der linken Sensorhälften im Vergleich zur Figur 12 vertauscht sind.

### Bezugszeichenliste

- 1: erster Modulator
- 1a: kuppelförmiger Bereich des ersten Modulators
- 1b: schräggeschliffener Bereich des ersten Modulators
- 1c: Vorsprung des ersten Modulators
- 1d: Befestigungsloch
- 2: zweiter Modulator
- 2a: gürtelförmiger Bereich des zweiten Modulators
- 2b: Befestigungsstift des zweiten Modulators
- 2c: rahmenförmiger Bereich des zweiten Modulators
- 3: Montagefläche
- 4: Fotodetektor
- 5: Hohlraum
- 6: Abdeckkappe
- 7: Sonne
- 8: Sonnensensor

## Patentansprüche

1. Sonnensensor zur Bestimmung der Sonnenposition aufweisend:
- einen Fotodetektor (3), der elektromagnetische Wellen empfängt,
- einen für elektromagnetische Wellen innerhalb eines Spektrums durchlässigen ersten Modulator (1), der den Fotodetektor (3) abdeckt und einen kuppelförmigen Bereich (1a) aufweist,
- einen weiteren Modulator (2), der für die elektromagnetischen Wellen innerhalb des Spektrums höchstens geringfügig durchlässig ist,
**dadurch gekennzeichnet, dass**
der weitere Modulator (2) einen gürtelförmigen Bereich (2a) mit variierender Breite (w) aufweist, der an der Außenseite des kuppelförmigen Bereichs des ersten Modulators (1) angeordnet ist und den ersten Modulator (i) teilweise abdeckt, wobei die Breite (w) so variiert dass gegenüber dem Fotodetektor (3) in senkrechter Richtung einfallende elektromagnetische Wellen von einem relativ breiten Bereich des Modulatorgürtels in einem höheren Maße ausgeblendet werden als flach einfallende elektromagnetische Wellen, wodurch eine Übersteuerung des Fotodetektors verhindert wird.

2. Sonnensensor nach Anspruch 1, bei dem der erste Modulator (1) mindestens einen kuppelförmigen Bereich (1a) aufweist und der Fotodetektor (3) relativ zur Einstrahlung der elektromagnetischen Wellen unterhalb des kuppelförmigen Bereichs (1a) angeordnet ist.

3. Sonnensensor nach einem der vorhergehenden Ansprüche, bei dem der erste Modulator (1) einen Schrägschliff (1b) aufweist.

4. Sonnensensor nach einem Anspruch 3, bei dem der Schrägschliff (1b) des ersten Modulators (1) hinsichtlich des weiteren Modulators (2) freiliegt.

5. Sonnensensor nach einem der vorhergehenden Ansprüche, bei dem der erste Modulator (1) sowohl als Linse als auch als Prisma wirkt.

6. Sonnensensor nach einem der vorhergehenden Ansprüche, bei dem der erste Modulator (1) ein transluzentes Material enthält.

7. Sonnensensor nach Anspruch 6, bei dem der erste Modulator (1) ein Polycarbonat enthält.

8. Sonnensensor nach einem der vorhergehenden Ansprüche, bei dem der erste Modulator (1) und der weitere Modulator (2) mittels einer Abdeckkappe (6) abgedeckt sind.

9. Sonnensensor nach Anspruch 8, bei dem die Abdeckkappe (6) eine Oberflächenrauhigkeit mit einer für elektromagnetische Wellen streuenden Wirkung aufweist.

10. Sonnensensor nach einem der vorhergehenden Ansprüche, bei dem das Spektrum, für das der erste Modulator (1) durchlässig ist, das Infrarotspektrum umfasst.

## Claims

1. Solar sensor for determining the solar position, comprising:
- a photodetector (3) that receives electromagnetic waves,
- a first modulator (1) that is permeable to electromagnetic waves within a spectrum, covers the photodetector (3) and has a dome-shaped region (1a),
- a further modulator (2) that at best is hardly permeable to the electromagnetic waves within the spectrum,
**characterized in that**
the further modulator (2) has a belt-shaped region (2a) with a varying width (w), which is arranged on the outside of the dome-shaped region of the first modulator (1) and partly covers the first modulator (1), the width (w) varying such that electromagnetic waves incident perpendicularly with respect to the photodetector (3) are masked to a greater extent by a relatively wide region of the modulator belt than electromagnetic waves incident at a shallow angle, as a result of which overloading of the photodetector is prevented.

2. Solar sensor according to Claim 1, wherein the first modulator (1) has at least one dome-shaped region (1a) and the photodetector (3) is arranged below the dome-shaped region (1a) relative to the incidence of the electromagnetic waves.

3. Solar sensor according to one of the preceding claims, wherein the first modulator (1) has a bevel (1b).

4. Solar sensor according to Claim 3, wherein the bevel (1b) of the first modulator (1) is uncovered with respect to the further modulator (2).

5. Solar sensor according to one of the preceding claims, wherein the first modulator (1) acts as both lens and prism.

6. Solar sensor according to one of the preceding claims, wherein the first modulator (1) contains a translucent material.

7. Solar sensor according to Claim 6, wherein the first modulator (1) contains a polycarbonate.

8. Solar sensor according to one of the preceding claims, wherein the first modulator (1) and the further modulator (2) are covered by means of a covering cap (6).

9. Solar sensor according to Claim 8, wherein the covering cap (6) has a surface roughness that has a scattering effect for electromagnetic waves.

10. Solar sensor according to one of the preceding claims, wherein the spectrum to which the first modulator (1) is permeable comprises the infrared spectrum.

## Revendications

1. Capteur solaire pour déterminer la position du soleil présentant :
- un détecteur photoélectrique (3) qui reçoit des ondes électromagnétiques,
- un premier modulateur (1) qui est transparent pour des ondes électromagnétiques à l'intérieur d'un spectre, lequel recouvre le détecteur photoélectrique (3) et présente une zone (1a) en forme de coupole,
- un autre modulateur (2) qui est au maximum légèrement transparent pour des ondes électromagnétiques à l'intérieur du spectre,
**caractérisé en ce que**
l'autre modulateur (2) présente une zone (2a) en forme de ceinture ayant une largeur (w) variable qui est disposée sur le côté extérieur de la zone en forme de coupole du premier modulateur (1) et recouvre partiellement le premier modulateur (1), la largeur (w) variant de telle sorte que les ondes électromagnétiques incidentes dans le sens vertical par rapport au détecteur photoélectrique (3) sont supprimées par une zone relativement large de la ceinture du modulateur à un niveau plus important que les ondes électromagnétiques incidentes à plat, ce qui permet d'éviter une saturation du détecteur photoélectrique.

2. Capteur solaire selon la revendication 1, dans lequel le premier modulateur (1) présente au moins une zone (1a) en forme de coupole et le détecteur photoélectrique (3) est disposé au-dessous de la zone (1a) en forme de coupole par rapport à l'incidence des ondes électromagnétiques.

3. Capteur solaire selon l'une des revendications précédentes, dans lequel le premier modulateur (1) présente un biseautage (1b).

4. Capteur solaire selon la revendication 3, dans lequel le biseautage (1b) du premier modulateur (1) est à découvert du point de vue de l'autre modulateur (2).

5. Capteur solaire selon l'une des revendications précédentes, dans lequel le premier modulateur (1) fait office à la fois de lentille et de prisme.

6. Capteur solaire selon l'une des revendications précédentes, dans lequel le premier modulateur (1) contient un matériau translucide.

7. Capteur solaire selon la revendication 6, dans lequel le premier modulateur (1) contient un polycarbonate.

8. Capteur solaire selon l'une des revendications précédentes, dans lequel le premier modulateur (1) et l'autre modulateur (2) sont recouverts au moyen d'un capot de protection (6).

9. Capteur solaire selon la revendication 8, dans lequel le capot de protection (6) présente une rugosité de surface ayant un effet de dispersion pour les ondes électromagnétiques.

10. Capteur solaire selon l'une des revendications précédentes, dans lequel le spectre, pour lequel le premier modulateur (1) est transparent, englobe le spectre infrarouge.
